# EUROPEAN PATENT APPLICATION

(11) **EP 3 878 541 A1**
(43) Date of publication of application: **15.09.2021**
(21) Application number: 20161770.1
(22) Date of filing: 09.03.2020
(51) Int. Cl.: B01D 53/06, B01D 53/26

(54) **CARBON DIOXIDE AND HUMIDITY CAPTURE SYSTEM AND METHOD**

(71) Applicant: Molecule RND Limited, Castleroy, Limerick (IE); Therma-Stor LLC, Madison, WI 53704 (US)
(72) Inventor: FRANCIS, Kurt, Limerick (IE); DEMONTE, Todd R., Madison, WI 53704 (US); DETTMERS, Daniel, Madison, WI 53704 (US)
(74) Representative: Appleyard Lees IP LLP

(57) **Abstract**

A system for obtaining water and carbon dioxide from an incoming first gas stream. The system comprises a first inlet for said incoming first gas stream, a first sorbent station comprising a first sorbent material for removing water vapour from said first gas stream, a second sorbent station comprising a second sorbent material for removing carbon dioxide from said first gas stream; and a first exhaust for said first gas stream. The system is configured to flow said first gas stream through the first inlet, the first sorbent station, the second sorbent station and the first exhaust. The system may be used in an environmentally controlled facility for growing plant material or in a building space conditioning. The present invention may therefore enable plant cultivation and / or building space conditioning whilst removing carbon dioxide from the atmosphere and therefore may help to combat climate change and benefit the environment, if implemented on a sufficient scale.

## Description

### Field

The present invention relates to a system and method for obtaining water and carbon dioxide from a gas stream. The present invention also relates to an environmentally controlled facility for growing plant material comprising such a system and a building fitted with such system in order to provide dehumidified and reduced CO₂ air to the building. In particular the present invention relates to the sequential removal of water vapour and CO₂ from an incoming air stream and the utilisation of the captured water and CO₂.

### Background

Climate change caused by the increased concentration of greenhouse gases in the atmosphere is a serious threat to the future of our ecosystems and economies. Carbon dioxide (CO₂) produced by human activity (referred to as anthropogenic CO₂) such as industry, agriculture, transportation and energy production is considered to be the most significant greenhouse gas driving climate change. In the last 50 years the atmospheric concentration of carbon dioxide has increased from 320 ppm in 1965 to almost 400 ppm in 2015. The predictions for the future concentrations of CO₂ are pessimistic, with the Intergovernmental Panel on Climate Change estimating that atmospheric CO₂ levels in 2100 will reach 570 ppm, resulting in a 2°C increase of the mean temperature of the planet. Such a temperature increase is likely to cause significant disruptions to the Earth's weather and sea levels, resulting in many detrimental effects to the environment. There is therefore a clear need to reduce CO₂ in the atmosphere. This could be achieved by reducing the production of anthropogenic CO₂ and/or by actively removing CO₂ from the atmosphere.

A reduction in the production of anthropogenic CO₂ could be achieved by reducing the use of fossil fuels for energy generation and transport, and by adopting alternative, renewable forms of energy. Active removal of CO₂ from the atmosphere may be achieved by "direct air capture" (DAC) technologies. Such captured CO₂ could be sequestered in a long-term storage form to remove it from the atmosphere completely, or could be utilized in different industrial applications, which may result in the eventual return of the CO₂ to the atmosphere. In order to have the most beneficial environmental impact, the captured CO₂ would be either sequestered in long term storage or used in an application which does not return the CO₂ to the atmosphere in the short term.

Recent attempts to commercialise DAC systems have had limited success due to high energy requirements, the need for highly specialised equipment and therefore high cost. As a result, DAC systems have not been widely implemented and have not made a significant contribution to removing atmospheric CO₂.

There is therefore a need for an improved direct air capture device for removing CO₂ from the atmosphere, in order to help address climate change.

Water is a fundamental resource, with plants, animals and humans all needing freshwater for survival. Water is also used heavily in agriculture and industrial processes. Water demand globally is projected to increase by 55% between 2000 and 2050. Much of this demand is driven by growing populations.

There is therefore a need to provide water in purified form sources comprising water and other components or impurities.

Atmospheric water vapour is an underexploited natural water resource which has the potential to provide purified water from air. The control of humidity in heating, ventilation and air conditioning (HVAC) systems involves removing water vapour from air to create a less humid environment. Current HVAC systems use substantial amounts of energy and therefore would not, in their current form provide an efficient means for the extraction of water from the atmosphere.

### Summary of the Invention

It is one aim of the present invention, amongst others, to provide a system or method for obtaining water and carbon dioxide from a gas stream that addresses at least one disadvantage of the prior art, whether identified here or elsewhere, or to provide an alternative to existing methods or systems. For instance, it may be an aim of the present invention to provide a system or method for capturing water and carbon dioxide which is more energy efficient and cost-effective than current methods and which may beneficially utilise the captured water and carbon dioxide *in situ.*

According to aspects of the present invention, there is provided a system and method as set forth in the appended claims. Other features of the invention will be apparent from the dependent claims, and from the description which follows.

According to a first aspect of the present invention, there is provided a system for obtaining water and carbon dioxide from an incoming first gas stream, the system comprising:
a first inlet for said incoming first gas stream;
a first sorbent station comprising a first sorbent material for removing water vapour from said first gas stream;
a second sorbent station comprising a second sorbent material for removing carbon dioxide from said first gas stream; and
a first exhaust for said first gas stream;
wherein the system is configured to flow said first gas stream through the first inlet, the first sorbent station, the second sorbent station and the first exhaust.

The inventors have found that the use of such first and second sorbent stations containing first and second sorbent materials respectively, can efficiently adsorb water vapour and carbon dioxide, respectively, from an incoming gas stream, for example ambient air. The system can therefore suitably provide water (suitably in a pure form) carbon dioxide and a gas stream having a reduced concentration of water vapour and carbon dioxide, each of which can be usefully employed at or close to the location of operation of the system, as will be further described herein.

The first and second sorbent materials used in the system of this first aspect typically comprise pores or cavities within their crystal structure. Therefore these sorbent materials they may also be described as being porous materials. Water and carbon dioxide respectively can enter into the pores of the first and second sorbent materials and be held within the pores by intermolecular interactions, for example by van der Waals forces. This may be considered a process of absorbing water into the bulk of the sorbent material. In another sense, this may be considered to be a process of adsorbing the water molecules onto a surface of the sorbent material, whether that be the outer surface of the material or the inner surface of the pores comprised within the crystal structure of the sorbent material. These materials are considered to mainly function by taking water into the pores in their crystal structure. The terms "sorbent" and "sorbing" are therefore used herein to describe this process which may be considered to be either adsorbing or absorbing. Herein the terms "adsorb", "adsorbed" and "adsorbed" are used to denote this process of water vapour and carbon dioxide being taken up by the first and second sorbent materials respectively, whether or not this process is considered a true "adsorbing" or "absorbing" process.

For the avoidance of doubt, the "system" of this first aspect refers to the hardware for carrying out the function of obtaining water and carbon dioxide from an incoming first gas stream. The system of this first aspect may therefore be considered a device for obtaining water and carbon dioxide from an incoming first gas stream.

Said incoming first gas stream is suitably a gaseous composition comprising water vapour and carbon dioxide, for example air, such as ambient air taken from the atmosphere surrounding the system of this first aspect, in use. Suitably the system is configured to receive said incoming first gas stream through the first inlet and expel the first gas stream from the system through the first exhaust, following removal of water vapour and carbon dioxide from said first gas stream by the first and second sorbent stations. Suitably the system comprises ducting to direct said first gas stream from the first inlet to the first and second sorbent stations and out of the first exhaust.

The system of this first aspect is suitably configured to receive said first gas stream and pass said first gas stream through the system, contacting the first sorbent material in the first sorbent station and the second sorbent material in the second sorbent station. Suitably the system comprises a means for impelling air through these parts of the system. For example, the system may comprise a fan for impelling air through the system. Suitably the system comprises a fan for propelling said incoming said first gas stream through the first inlet, the first sorbent station the second sorbent station and the first exhaust. The system may comprise a vacuum pump for propelling said incoming said first gas stream through the system.

In some embodiments, the system is configured to be moved relative to ambient air and therefore said first gas stream may be created by movement of the system in air. For example, the system may be configured for mounting on a vehicle, such as a train or ship, and when said vehicle moves in normal use said first gas stream would be provided to the system through the first inlet. In such embodiments, the first inlet is suitably adapted to admit sufficient air into the system when the system moves through air.

Suitably the system is configured to remove water from the first sorbent material, after said water has been adsorbed by the first sorbent material, i.e. by desorbing water or water vapour from the first sorbent material. Suitably desorption occurs when the first sorbent material is subjected to a stimulus, for example a change in humidity or a change in temperature. Desorption may occur on application of external energy. Desorption may occur upon a reduction in humidity and/or an increase in temperature, suitably by applying a gas stream having an increased temperature and a decreased humidity, compared to the incoming first gas stream.

Suitably the system comprises a first desorption station for removing water from the first sorbent material, i.e. by desorbing water (or water vapour) from the first sorbent material and transporting said water away from the first sorbent station, for example for use elsewhere. Suitably the first desorption station is a first dehumidifier module for removing water vapour from the first sorbent material. Suitably the first dehumidifier module is a refrigerant dehumidifier. A suitable refrigerant dehumidifier is configured to desorb water vapour from the first sorbent material using a first desorbing gas stream (suitably heated dry air) which is then cooled to condense liquid water from the first desorbing gas stream. The liquid water is then collected for use and the first desorbing gas stream re-heated to continue cycling through the first sorbent material.

Using this process, the first desorption station suitably regenerates the first sorbent material to enable further sorption of water vapour from the first gas stream.

Suitably the first sorbent station is configured to move the first sorbent material between a sorption position wherein water vapour can be adsorbed into the first sorbent material and a desorption position wherein water vapour can be desorbed from the first sorbent material. For example, the first sorbent station may be a sorbent rotor which rotates portions of the first sorbent material into and out of contact with said incoming first gas stream. Suitably the first sorbent station also rotates portions of the first sorbent material into and out of contact with said first desorbing gas stream. Suitably the first sorbent station continuously rotates so that portions of first sorbent material are alternately exposed to said incoming first gas stream and said first desorption gas stream. Therefore the first sorbent station suitably continuously adsorbs water vapour from said incoming first gas stream and the desorption station continuously desorbs water vapour from the first sorbent material for condensing and collecting as liquid water.

Said liquid water obtained from the system may be utilized in any suitable application.

Suitably the system is configured to remove carbon dioxide from the second sorbent material, after said carbon dioxide has been adsorbed by the second sorbent material, i.e. by desorbing carbon dioxide from the first sorbent material. Suitably desorption occurs when the second sorbent material is subjected to a stimulus, for example a change in humidity or a change in temperature. Desorption may occur on application of external energy. Desorption may occur upon a reduction in humidity and/or an increase in temperature, suitably by applying a gas stream having an increased temperature and a decreased humidity, compared to the incoming first gas stream.

Suitably the system comprises a second desorption station for removing carbon dioxide from the second sorbent material, i.e. by desorbing carbon dioxide from the second sorbent material and transporting said carbon dioxide away from the second sorbent station, for example for use elsewhere. Suitably the second desorption station is configured to receive a second gas stream for desorbing carbon dioxide from the second sorbent material. Said second gas stream may be referred to as a second desorbing gas stream. Suitably the system comprises a second inlet for said second gas stream, the second inlet configured to direct said second gas stream through the second sorbent material to remove carbon dioxide from the second sorbent material. Said second gas stream is therefore suitably enriched in carbon dioxide after passing through the second sorbent material, compared to when said second gas stream enters the second sorbent station.

Using this second gas stream, the second desorption station suitably regenerates the second sorbent material to enable further sorption of carbon dioxide from the first gas stream.

Suitably the second sorbent station is configured to move the second sorbent material between a sorption position wherein carbon dioxide can be adsorbed into the second sorbent material and a desorption position wherein carbon dioxide can be desorbed from the second sorbent material. For example, the second sorbent station may be a sorbent rotor which rotates portions of the second sorbent material into and out of contact with said incoming first gas stream. Suitably the second sorbent station also rotates portions of the second sorbent material into and out of contact with said second desorbing gas stream. Suitably the second sorbent station continuously rotates so that portions of second sorbent material are alternately exposed to said incoming first gas stream and said second desorption gas stream. Therefore the second sorbent station suitably continuously adsorbs carbon dioxide from said incoming first gas stream and the second desorption station continuously desorbs carbon dioxide from the second sorbent material for collection and use.

Therefore in the system according to this first aspect, suitably the first sorbent station is configured to move the first sorbent material alternately between the first inlet and a first desorption position and the second sorbent station is configured to move the second sorbent alternately between the first exhaust and a second desorption position. Suitably the first sorbent station and the second sorbent station comprise sorbent rotors to carry out this function.

Suitably the system comprises a second exhaust to direct said second gas stream away from the second desorption station.

Suitably the system is configured to direct said second gas stream from the second inlet, through the second desorption station and out of the second exhaust. Suitably the system comprises ducting to direct said second gas stream from the second inlet to the second desorption station and from the second desorption station to the second exhaust. Suitably the ducting connects the second inlet, the second desorption station and the second exhaust.

Said carbon dioxide and/or carbon dioxide enriched second gas stream obtained from the system may be utilized in any suitable application.

The system of this first aspect is suitably configured to direct said first gas stream from the first inlet to the second sorbent station. Suitably the system is configured to direct said first gas stream from the first inlet to the first sorbent station and then to the second sorbent station. Suitably the system is configured to then direct said first gas stream from the second sorbent station to the first exhaust. Suitably the system comprises ducting to direct said first gas stream from the first inlet to the first sorbent station, from the first sorbent station to the second sorbent station and from the second sorbent station to the first exhaust. Suitably the ducting connects the first inlet, the first sorbent station, the second sorbent station and the first exhaust.

Therefore the system of this first aspect is suitably configured to firstly remove water vapour from said incoming first gas stream at the first sorbent station and then secondly remove carbon dioxide from said first gas stream at the second sorbent station. The inventors have found that removing water vapour from said incoming first gas stream (such as air) before removing carbon dioxide provides a more efficient adsorption of carbon dioxide at the second sorbent station. In other words, carbon dioxide adsorption has been found to be more efficient from reduced water vapour air than from ambient air. Therefore the system of this first aspect can more efficiently provide water and carbon dioxide from air when operating in this configuration.

Suitably the system of this first aspect is configured to remove water vapour from said second gas stream before said second gas stream contacts the second sorbent material. The system may comprise a second dehumidifier module for removing water vapour from said second gas stream. The second dehumidifier may be as described in relation to the first dehumidifier. The second dehumidifier may therefore also be a refrigerant dehumidifier.

Alternatively, the system of this first aspect may comprise a third sorbent station comprising a third sorbent material for removing water vapour from said second gas stream. The third sorbent station may be configured as described in relation to the first sorbent station and may operate in relation to the second gas stream as described for the first sorbent station operating in relation to the first gas stream. Therefore the third sorbent station suitably reduces the concentration of water vapour in said second gas stream before said second gas stream passes to the second desorption station. The inventors have found that desorption of carbon dioxide from the second sorbent material may be more efficient (and therefore require less energy) when the concentration of water vapour in said second gas stream is reduced, for example compared to ambient air.

As described in relation to the first and second sorbent stations, the third sorbent station may be a sorbent rotor which rotates portions of the third sorbent material into and out of contact with said second gas stream.

Suitably the system is configured to direct said second gas stream from the second inlet, through the third sorption station, through the second desorption station and out of the second exhaust. Suitably the system comprises ducting to direct said second gas stream from the second inlet to the third sorbent station, from the third sorbent station to the second desorption station and from the second desorption station to the second exhaust. Suitably the ducting connects the second inlet, the third sorbent station, the second desorption station and the second exhaust.

The system suitably comprises a third desorption station for removing water from the third sorbent material, i.e. by desorbing water (or water vapour) from the third sorbent material and transporting said water away from the third sorbent station, for example for use elsewhere. The third desorption station may be as described in relation to the first desorption station. The third desorption station may be a second dehumidifier module. The system may therefore comprise a second dehumidifier module for removing water vapour from the third sorbent material. The second dehumidifier module may be as described in relation to the first dehumidifier module. The second dehumidifier module may therefore also be a refrigerant dehumidifier.

Refrigerant dehumidifiers produce waste heat during operation. This waste heat may be usefully captured by the system of this first aspect during operation. Such waste heat may be used to heat either the first and/or second gas streams. Suitably said waste heat is used to heat said second gas stream. Therefore the system is suitably configured to transfer heat from the first dehumidifier module to said second gas stream. Heating said second gas stream may improve the efficiency of carbon dioxide desorption from the second sorbent material. Suitably the system is configured to transfer heat from the first dehumidifier module to said second gas stream after said second gas stream has passed through the third sorbent station.

### Sorbent materials

The first and second sorbent materials of the system of this first aspect may be any suitable sorbent material for capturing water vapour and carbon dioxide respectively. For example, the first sorbent material may be a zeolite or a mesoporous silica. The first sorbent may be a silica such as a Syloid® material, for example Syloid® AI-1, which is an industry standard water adsorbent material.

Suitably the first sorbent material is a hybrid ultramicroporous material, suitably such a material having favourable water vapour adsorption and desorption kinetics and a high capacity for water absorbance. Suitable hybrid ultramicroporous materials are the water and / or water vapour capturing porous metal-organic framework materials described in WO 2020 / 021112 A1. For example, the first sorbent material may be selected from any one or more of [Cu₂(glutarate)₂(4,4'-bipyridine)] (also known as ROS-037), [Cu₂(glutarate)₂(1,2-di(pyridine-4-yl)-ethene)] (also known as AMK-059), [Co₃(µ₃-OH)₂(2,4-pyridinedicarboxylate)₂] (also known as Co-CUK-1), [Mg₃(µ₃-OH)₂(2,4-pyridinedicarboxylate)₂] (also known as Mg-CUK-1), [Co₃(µ₃-OH)₂(benzotriazolate-5-carboxylate)₂], [Zr₁₂O₈(µ₃-OH)₈(µ₂-OH)₆(benzene-1,4-dicarboxylate)g] (also known as hcp-UiO-66). In some embodiments, the first sorbent material is [Cu₂(glutarate)₂(4,4'-bipyridine)] (also known as ROS-037). The inventors have found that these materials function effectively in the present invention due to their fast water vapour adsorption and desorption kinetics and their high capacity for water. These properties enable the system of the present invention to operate efficiently with respect to water vapour removal from said incoming first gas stream and said second gas stream, when present.

In some embodiments, the first sorbent material may be a two-dimensional layered metal-organic material described in WO 2020 / 021112 A1, suitably a flexible two-dimensional layered metal-organic material. For example, the first sorbent material may be a two-dimensional layered metal-organic material selected from sql-3-Cu-BF₄, sql-2-Cu-BF₄, sql-2-Cu-OTf, sql-1-Cu-NO₃, sql-A14-Cu-NO₃, sql-1-Co-NO₃ and sql-1-Ni-NO₃.

Suitably the second sorbent material is a hybrid ultramicroporous material, suitably such a material having favourable carbon dioxide adsorption and desorption kinetics and a high capacity for carbon dioxide absorbance. Suitable hybrid ultramicroporous materials are the carbon dioxide capturing porous metal-organic framework materials described in US 9492778 B1, suitably having a greater relative affinity for carbon dioxide than water vapour. For example, the second sorbent material may be selected from any one or more of [Cu(4,4'-dipyridylacetylene)₂(SiF₆)] (also known as SIFSIX-2-Cu); a pair of interpenetrated nets of [Cu(4,4'-dipyridylacetylene)₂(SiF₆)] (also known as SIFSIX-2-Cu-i) and [Zn(pyr)₂(SiF₆)] (also known as SIFSIX-3-Zn).

In some embodiments, the second sorbent material may be a fluorinated metal-organic framework material described in "A Fine-Tuned Fluorinated MOF Addresses the Needs for Trace CO2 Removal and Air Capture Using Physisorption", Bhatt, P. M. et al, Journal of the American Chemical Society 2016 138 (29), 9301-9307, or may be a hybrid ultramicroporous material described in "Hybrid ultramicroporous materials (HUMs) with enhanced stability and trace carbon capture performance", Zaworotko, M. J. et al, Chemical Communications 2017 53 (44), 5946-5949. For example, the second sorbent material may be NbOFFIVE-1-Ni.

The inventors have found that these materials function effectively in the present invention due to their fast carbon dioxide adsorption and desorption kinetics and their high capacity for carbon dioxide. These properties enable the system of the present invention to operate efficiently with respect to carbon dioxide removal from said incoming first gas stream.

In embodiments wherein the first and second sorbent stations are sorbent rotors, the first and second sorbent materials described above are suitably arranged in a first and second sorbent cartridge for such sorbent rotors, respectively. Suitably the first and second sorbent materials are arranged on a support in the first and second sorbent cartridges. A suitable support may be a form of paper, cellulose or an epoxy/fibreglass matrix.

The third sorbent material may be as described in relation to the first sorbent material.

### Specific uses of the system

The system of this first aspect may be used in a variety of different situations wherein water and carbon dioxide are required and / or wherein reduced water vapour air, increased water vapour air and reduced carbon dioxide air are required.

In some embodiments, the system of this first aspect is configured for use as a building space conditioning unit. A space conditioning unit may typically control the internal atmosphere of a building by heating, cooling, dehumidifying, humidifying or filtration, or a combination thereof as necessary. In such embodiments, the first inlet is configured to receive ambient air from inside or outside said building as said first gas stream; and the first exhaust is configured to expel said first gas stream with reduced water vapour and reduced carbon dioxide content into said building. Suitably, the first inlet is configured to receive air from inside said building as said first gas stream.

Suitably said reduced water vapour and reduced carbon dioxide first gas stream expelled into said building has a lower water vapour and carbon dioxide content than the incoming first gas stream, i.e. the ambient air inside said building. Suitably said reduced water vapour and reduced carbon dioxide first gas stream expelled into said building has an optimised water vapour and carbon dioxide content for supply into buildings. Suitably the amount of carbon dioxide in said reduced water vapour and reduced carbon dioxide first gas stream has a lower carbon dioxide content than a gas stream produced by a known building air or space conditioning unit, compared to ambient air in the building and in some embodiments compared to ambient air outside the building.

The air in typical buildings in use by people gradually increases in carbon dioxide content due to respiration of occupants of the building. The concentration of carbon dioxide in buildings can increase from an ambient level of around 400 ppm to 1,000 ppm and above, during high occupancy of the building. Carbon dioxide concentrations of 1,000 ppm and above in air inside buildings are considered detrimental to the comfort and health of the occupants of the building. Therefore the system of the present embodiments, configured for use as a building space conditioning unit, suitably takes in air from said building having a carbon dioxide concentration above 400 ppm as said first gas stream and provides said reduced water vapour and reduced carbon dioxide first gas stream having a carbon dioxide concentration of approximately 400 ppm or lower, back into said building.

Suitably the system operates to decrease the carbon dioxide content of the air inside the building to the above levels and then to maintain the above levels during operation of the system in the building. The system therefore suitably obtains a steady state wherein the production of carbon dioxide by occupants of the building is balanced by the removal of carbon dioxide from said first gas stream.

In such embodiments, the inlet for said incoming first gas stream is suitably configured to receive said first gas stream from said building, suitably from an internal space of said building requiring cooling / air conditioning. Suitably the first inlet is arranged in or is connected to a duct which has the inlet in, said internal space of said building. Suitably, the first exhaust is configured to expel said first gas stream having reduced water vapour and reduced carbon dioxide into said internal space of said building. Said first gas stream having reduced water vapour and reduced carbon dioxide suitably has an increased concentration of oxygen compared to said incoming first gas stream (i.e. ambient air inside or outside said building) as a result of carbon dioxide being removed.

Therefore the system may take in air from the building, remove at least some of the water vapour and carbon dioxide from the air and expel reduced water vapour and reduced carbon dioxide air back into the building. The system therefore suitably provides dehumidified and reduced carbon dioxide air to the building. The system may also be configured to cool the air in the building. Providing reduced water vapour and reduced carbon dioxide air to the internal space of a building may provide an improvement in the internal environment of the building for the users of the building. In particular, providing reduced carbon dioxide air as well as reduced water vapour (and cooled) air may provide a further improvement in the internal environment of the building, as users may benefit from the relative increase in oxygen concentration of the air of the building which is provided by reducing the amount of carbon dioxide in the air as described above.

In such embodiments, the beneficial supply of optimal water vapour and reduced carbon dioxide air (therefore having a net relative increase in the percentage of oxygen and all other components in the first air stream) may also simultaneously provide liquid water and gaseous carbon dioxide (when the first and second desorbing stations as described above are present) which may be used for other beneficial applications as described herein. For example, the liquid water collected may be used to water plants / crops or may be used in an industrial process, for washing or for human consumption. The carbon dioxide collected may be used in an industrial process, may be sequestered in a long-term storage form or may be used to supply plants with a carbon dioxide enriched atmosphere.

In some embodiments, the system of this first aspect is configured for supplying an environmentally controlled facility for growing plant material which is referred to herein as a grow room with water and carbon dioxide enriched air. The term "grow room" is intended to encompass all Controlled Environment Agriculture (CEA) or Controlled Environment Horticulture (CEH) facilities, which includes facilities with fenestration to admit natural light to plants growing inside, facilities that use only artificial lights to grow plants or a combination of the two. Examples of such facilities include greenhouses, hybrid greenhouses, hydroponics, aeroponics, aquaculture, aquaponics and fully enclosed grow rooms. Suitably both the water and the carbon dioxide enriched air are used by plants in said grow room to survive and grow. The plants grown in said grow room may be crops for human or animal consumption or for other uses. The carbon dioxide enriched air may advantageously stimulate growth of the plants relative to ambient air in said grow room. The carbon dioxide taken from the incoming air stream is therefore incorporated into the tissues of the growing plants and is therefore removed from the atmosphere, potentially providing an environmental benefit in the reduction in atmospheric carbon dioxide, if the present system is implemented on a sufficient scale.

In some embodiments, said grow room is sealed to the outside atmosphere apart from the inlet and exhaust for said first gas stream. Suitably said grow room is sealed to the outside atmosphere apart from the inlet and exhaust for said first gas stream when the system of the first aspect is in operation. In some embodiments, the grow room may not be sealed to allow some ventilation, suitably in periods when the system is not operating. Therefore, said grow room comprises a controllable and substantially sealed atmosphere around plants arranged in said grow room. This enables the concentration of gases in the atmosphere inside the grow room (to which the plants are exposed) to be modified by the system of this first aspect. The system of the present embodiments, configured for use in supplying a grow room with carbon dioxide enriched air and water, suitably supplies to said grow room carbon dioxide enriched air (as said second gas stream) having a carbon dioxide content above 400 ppm, suitably above 1,000 ppm, suitably above 10,000 ppm, suitably approximately 50,000 ppm which may be considered optimal for stimulating plant growth. Suitably the carbon dioxide content of said carbon dioxide enriched air (said second gas stream) is from 10,000 ppm to 100,000 ppm, suitably from 25,000 to 75,000 ppm, suitably from 40,000 to 60,000 ppm.

Suitably the system operates to increase the carbon dioxide content of the air inside the grow room to the above levels and then to maintain the above levels during operation of the grow room. The system therefore suitably obtains a steady state wherein the consumption of carbon dioxide by the plants in the grow room is balanced by the input of carbon dioxide into the grow room from said second gas stream.

In such embodiments, the first inlet for said incoming gas stream may be configured to take said incoming first gas stream from ambient air outside said grow room. Suitably the first inlet is configured to take ambient air from inside said grow room. The first exhaust is suitably arranged to expel said first gas stream having reduced water vapour and reduced carbon dioxide outside said grow room (i.e. to an atmosphere not in contact with plants inside said grow room). Suitably the first exhaust is arranged outside said grow room.

In such embodiments, the first desorption station is present. As described above, the first desorption station may be a first refrigerant dehumidifier. In such embodiments, the second desorption station for removing carbon dioxide from the second sorbent material is present and, as described above, suitably is configured to receive a second gas stream for desorbing carbon dioxide from the second sorbent material.

In such embodiments, the second desorption station, second inlet and second exhaust described above are present and configured to pass through said second gas stream and desorb carbon dioxide from the second sorbent material. Suitably the system is configured to expel said second gas stream (enriched in carbon dioxide) out of the second exhaust into an inside space of the grow room so that said enriched carbon dioxide air contacts plants in the grow room. As such, growth of said plants may be stimulated by the enriched carbon dioxide air. Suitably the second inlet for said second gas stream is configured to take said second gas stream from an inside space of said grow room. Suitably the second inlet is located in an inside space of said grow room, and therefore is said second gas stream is taken from the atmosphere around said plants in said grow room. Suitably the second inlet and the second exhaust are located and spaced apart in an inside space of said grow room. Therefore the system suitably functions by taking air from inside the grow room, enriching the air in carbon dioxide by desorbing carbon dioxide from the second sorbent material and expelling the carbon dioxide enriched air back into the grow room for use by plants to stimulate growth and be incorporated into the tissue of the plants.

In such embodiments, the third desorption station as described above is suitably present. As described above, the third desorption station may be a second refrigerant dehumidifier which functions to remove water vapour from the second gas stream. This dehumidifies the second gas stream and may advantageously improve the carbon dioxide uptake (by desorption from the second sorbent material) of the second gas stream, which in turn may more efficiently supply the grow room with carbon dioxide to stimulate plant growth.

Suitably the second and third desorption stations supply liquid water and the system is configured to irrigate plants in said grow room with said liquid water.

Therefore in such embodiments, the system suitably functions by removing water vapour and carbon dioxide from a first gas stream from outside the grow room and expels reduced water vapour and reduced carbon dioxide air into the atmosphere, and uses the water and carbon dioxide extracted from the first air stream to irrigate and stimulate growth of plants in the grow room, respectively. The system therefore provides a means of growing plants which removes carbon dioxide from the atmosphere (at a greater rate than growing plants in ambient conditions would), incorporating this carbon dioxide into plants for consumption or use and irrigating these plants with water obtained from the atmosphere, rather than using scarce freshwater supplies. As such, the present system may allow the efficient growth of plants in a controlled environment where a freshwater source is not available and which provides a net removal of carbon dioxide from the atmosphere. The grow room in which the system operates may be used to grow crops for use / consumption by humans or animals, or may be used to grow plants which are intended to be used for medium to long-term carbon storage, for example by producing biochar. Therefore the system of this first aspect may provide an efficient means of capturing carbon dioxide from the atmosphere for medium to long-term storage, in order to benefit the environment by reducing atmospheric carbon dioxide concentrations.

In some embodiments, the system of this first aspect may be configured as a grow room and a building space conditioning unit, wherein the first exhaust is configured to expel said first gas stream having reduced water vapour and reduced carbon dioxide into an internal space of said building. Therefore the system of this first aspect may simultaneously provide the benefits of both said building space conditioning unit and said grow room described above.

Suitably the system of this first aspect is powered using electricity. Suitably the power requirements of the system are provided by renewable energy and/or low carbon emission energy. Suitably the system is powered by electricity generated from renewable sources, for example by solar energy or wind power. Powering the system with renewable energy may further increase the environmental benefits of the present invention.

According to a second aspect of the present invention, there is provided a grow room for growing one or more plants, the grow room comprising a system according to the first aspect, the system comprising a second inlet and a second exhaust for a second gas stream, the second inlet configured to direct said second gas stream through the second sorbent material to remove carbon dioxide from the second sorbent material and the second exhaust configured to direct said second gas stream out of the second sorbent material;
wherein the first inlet is configured to receive ambient air from outside the grow room as said first gas stream;
wherein the first exhaust is configured to expel said first gas stream with reduced water vapour and reduced carbon dioxide out of the grow room;
wherein the second inlet is configured to receive air from inside the grow room as said second gas stream;
wherein the second exhaust is configured to expel said second gas stream with an increased carbon dioxide content into the grow room.

The system suitably has any of the features and advantages described in relation to the first aspect.

Suitably the system in the grow room of this second aspect suitably comprises a third sorbent station comprising a third sorbent material for removing water vapour from said second gas stream; wherein the third sorbent station is positioned in said gas stream between the second inlet and the second sorbent station.

In some embodiments, the grow room may be a greenhouse.

In some embodiments, the grow room is configured for use as a building space conditioning unit, wherein the first inlet is configured to receive ambient air from inside or outside said building as said first gas stream; and wherein the first exhaust is configured to expel the first gas stream with reduced water vapour and reduced carbon dioxide content into said building. The grow room may have any of the suitable features and advantages described in relation to the first aspect. Suitably the first gas stream having reduced water vapour and reduced carbon dioxide provides conditioned and air having an increased oxygen content for the building.

According to a third aspect of the present invention, there is provided a building comprising an internal space and a grow room according the second aspect, wherein the first exhaust is configured to expel said first gas stream with reduced water vapour and reduced carbon dioxide content into an internal space of the building.

According to a fourth aspect of the present invention, there is provided a method of obtaining water and carbon dioxide from an incoming first gas stream, the method comprising the steps of:
a) providing a first gas stream;
b) contacting the first gas stream with a first sorbent material to remove water vapour from the first gas stream;
c) collecting water from the first sorbent material;
d) contacting the first gas stream with a second sorbent material to remove carbon dioxide from the first gas stream;
e) collecting carbon dioxide from the second sorbent material; and
f) expelling the first gas stream with reduced water vapour and carbon dioxide content.

Suitably the steps of the method are carried out in the stated order, on the first gas stream.

The first gas stream and first and second sorbent materials may have any of the suitable features and advantages described in relation to the first aspect.

The method of this fourth aspect may be carried out using a system of the first aspect, a grow room of the second aspect or a building of the third aspect.

Suitably step e) involves providing a second gas stream and contacting the second gas stream with the second sorbent material to remove carbon dioxide from the second sorbent material and enrich the second gas stream with carbon dioxide.

Suitably step e) involves contacting the second gas stream with a third sorbent material to remove water vapour from the second gas stream and collecting water from the third sorbent material. Suitably the third sorbent material is as described in relation to the first aspect.

Suitably the collecting of water from the first and third sorbent materials is carried out using a dehumidifier, for example a refrigerant dehumidifier, as described above in relation to the first aspect.

Suitably the method of this fourth aspect advantageously provides carbon dioxide (or carbon dioxide enriched air) and liquid water from an ambient air input and also provides reduced water vapour and reduced carbon dioxide air, all of which can be usefully employed in the situations described herein.

### Brief Description Of The Drawings

For a better understanding of the invention, and to show how example embodiments may be carried into effect, reference will now be made to the accompanying drawings in which:
Figure 1 is a schematic of a system according to the first aspect of the present invention.
Figure 2 is a schematic of an alternative configuration of a system according to the first aspect of the present invention.

### Detailed Description Of The Example Embodiments

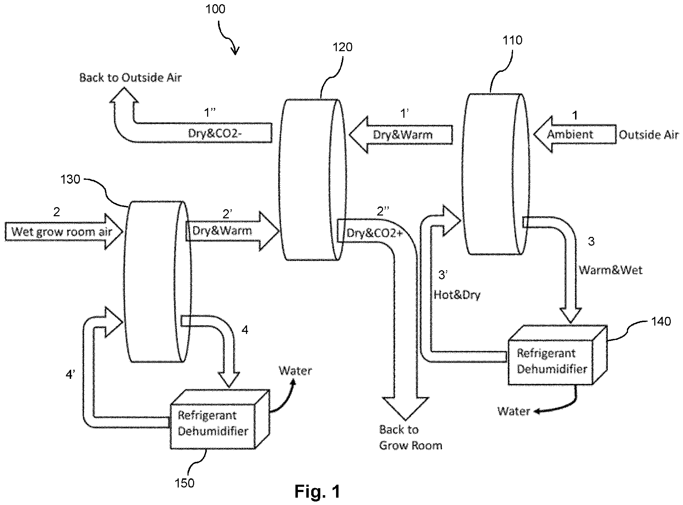

Figure 1 shows a schematic 100 to illustrate the operation of the system and method of the present invention. The system 100 is arranged in a grow room for the controlled cultivation of plants, for example high value crops such as herbs, berry-producing plants, medicinal plants or plants which can be converted to biochar for long-term carbon storage. The system 100 comprises first sorbent station 110, second sorbent station 120 and third sorbent station 130. The system is supplied with an incoming first gas stream 1 which is ambient air and an exhaust for the first gas stream 1. The grow room in which the system is fitted is otherwise sealed to the outside atmosphere apart from the inlet and exhaust for the first gas stream. The system 100 is also supplied with second gas stream 2 which is air from inside the grow room. The first and third sorbent stations 110 and 130 are provided with a first and third sorbent material respectively which have a high affinity and capacity for adsorbing water vapour. The first and third sorbent stations 110 and 130 are connected to refrigerant dehumidifiers 140 and 150 via desorbing gas streams 3 and 4. The second sorbent station 120 is provided with a second sorbent material having a high affinity and capacity for adsorbing carbon dioxide.

In operation, the first gas stream 1 is directed to the first sorbent station 110 where water vapour is removed by the first sorbent material to provide reduced water vapour first gas stream 1'. The reduced water vapour first gas stream 1' is then directed to the second sorbent station 120 where carbon dioxide is removed by the second sorbent material to provide reduced water vapour and reduced carbon dioxide first gas stream 1", which is then directed outside of the grow room.

Whilst this process is being carried out on the first gas stream 1, the desorbing gas stream 3 is desorbing water vapour from the first sorbent material, which was captured from the first gas stream 1, and then this water vapour is condensed by refrigerant dehumidifier 140 to provide liquid water for irrigation of plants growing in the grow room.

Also, whilst the above processes are being carried out, second gas stream 2 is directed to the third sorbent station 130 where water vapour is removed by the third sorbent material to provide reduced water vapour second gas stream 2'. The reduced water vapour second gas stream 2' is then directed to the second sorbent station 120 where carbon dioxide is desorbed from the second sorbent material to provide reduced water vapour and enriched carbon dioxide gas stream 2". This gas stream 2" is then directed inside the grow room to increase the concentration of carbon dioxide in the grow room and thereby stimulate the growth of plants in the grow room.

Finally, whilst the above processes are being carried out, the desorbing gas stream 4 is desorbing water vapour from the third sorbent material, which was captured from the second gas stream 2, and then this water vapour is condensed by refrigerant dehumidifier 150 to provide further liquid water for irrigation of plants growing in the grow room.

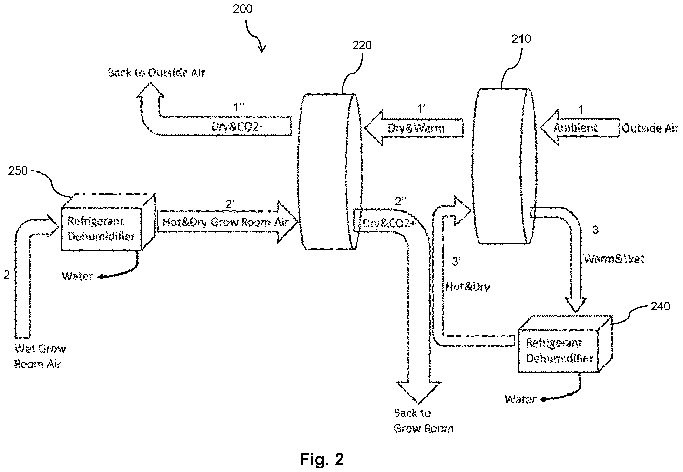

Figure 2 shows a system 200 having an alternative configuration to system 100, wherein reduced water vapour second gas stream 2' is provided by refrigerant dehumidifier 250, rather than by third sorbent station 130. The rest of the system 200 functions is as described in relation to system 100, comprising first and second sorbent stations 210 and 220 which are analogous to first and second sorbent stations 110 and 120 and refrigerant dehumidifier 240 which is analogous to refrigerant dehumidifier 140.

The systems 100 and 200 operate to take ambient air and provide liquid water and a carbon dioxide enriched atmosphere to facilitate the growth of plants in the grow room, in an energy efficient manner using high performance sorbent materials. The system of the present invention can provide plant cultivation and / or building space conditioning whilst removing carbon dioxide from the atmosphere and therefore help to combat climate change and benefit the environment, if implemented on a sufficient scale.

Although a few preferred embodiments have been shown and described, it will be appreciated by those skilled in the art that various changes and modifications might be made without departing from the scope of the invention, as defined in the appended claims.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1 % by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, and drawings), or to any novel one, or any novel combination, of the steps of any method or process so disclosed.

## Claims

1. A system for obtaining water and carbon dioxide from an incoming first gas stream, the system comprising:
a first inlet for said incoming first gas stream;
a first sorbent station comprising a first sorbent material for removing water vapour from said first gas stream;
a second sorbent station comprising a second sorbent material for removing carbon dioxide from said first gas stream; and
a first exhaust for said first gas stream;
wherein the system is configured to flow said first gas stream through the first inlet, the first sorbent station, the second sorbent station and the first exhaust.

2. The system according to claim 1, comprising a first dehumidifier module for removing water vapour from the first sorbent material.

3. The system according to claim 1 or claim 2, comprising a second inlet for a second gas stream, the second inlet configured to direct said second gas stream through the second sorbent material to remove carbon dioxide from the second sorbent material.

4. The system according to claim 3, wherein the system is configured to remove water vapour from said second gas stream before said second gas stream contacts the second sorbent material

5. The system according to claim 4 comprising a third sorbent station comprising a third sorbent material for removing water vapour from said second gas stream and a second dehumidifier module for removing water vapour from the third sorbent material.

6. The system according to any of claims 3 to 5, when dependent on claim 2, wherein the second inlet is configured to transfer heat from the first dehumidifier module to said second gas stream.

7. The system according to any preceding claim, wherein the first sorbent station is configured to move the first sorbent material alternately between the first inlet and a first desorption position and the second sorbent station is configured to move the second sorbent alternately between the first exhaust and a second desorption position.

8. The system according to any preceding claim, wherein the first sorbent material is selected from a zeolite, a mesoporous silica and a hybrid ultramicroporous material, suitably a hybrid ultramicroporous material.

9. The system according to any preceding claim, wherein the second sorbent material is a hybrid ultramicroporous material.

10. The system according to any preceding claim configured for use as a building space conditioning unit, wherein the first inlet is configured to receive ambient air from inside or outside said building as said first gas stream; and wherein the first exhaust is configured to expel said first gas stream with reduced water vapour and reduced carbon dioxide content into said building.

11. A grow room for growing one or more plants, the grow room comprising a system according to any preceding claim, the system comprising a second inlet and a second exhaust for a second gas stream, the second inlet configured to direct said second gas stream through the second sorbent material to remove carbon dioxide from the second sorbent material and the second exhaust configured to direct said second gas stream out of the second sorbent material;
wherein the first inlet is configured to receive ambient air from outside the grow room as said first gas stream;
wherein the first exhaust is configured to expel said first gas stream with reduced water vapour and reduced carbon dioxide out of the grow room;
wherein the second inlet is configured to receive air from inside the grow room as said second gas stream;
wherein the second exhaust is configured to expel said second gas stream with an increased carbon dioxide content into the grow room.

12. The grow room according to claim 11, wherein the system comprises a third sorbent station comprising a third sorbent material for removing water vapour from said second gas stream; wherein the third sorbent station is positioned in said gas stream between the second inlet and the second sorbent station.

13. The grow room according to claim 11 or claim 12, configured for use as a building space conditioning unit, wherein the first inlet is configured to receive ambient air from inside or outside said building as said first gas stream; and wherein the first exhaust is configured to expel said first gas stream with reduced water vapour and reduced carbon dioxide content into said building.

14. A building comprising an internal space and a grow room according to claim 13, wherein the first exhaust is configured to expel said first gas stream with reduced water vapour and reduced carbon dioxide content into an internal space of the building.

15. A method of obtaining water and carbon dioxide from an incoming first gas stream, the method comprising the steps of:
a) providing a first gas stream;
b) contacting the first gas stream with a first sorbent material to remove water vapour from the first gas stream;
c) collecting water from the first sorbent material;
d) contacting the first gas stream with a second sorbent material to remove carbon dioxide from the first gas stream;
e) collecting carbon dioxide from the second sorbent material; and
f) expelling the first gas stream with reduced water vapour and carbon dioxide content.
